# FASCICULE DE BREVET EUROPEEN

(11) **EP 0 978 949 B1**
(45) Date de publication et mention de la délivrance du brevet: **30.05.2007**
(21) Numéro de dépôt: 99401962.8
(22) Date de dépôt: 02.08.1999
(51) Int. Cl.: H04B 1/48, H03H 11/48

(54) **Dispositif de commutation de signaux radio-fréquences**
Schalter für Funkfrequenzsignale
Radio frequency switch

(30) Priorité: 03.08.1998 FR 9809930
(43) Date de publication de la demande: 09.02.2000
(73) Titulaire: STMicroelectronics S.A., 92120 Montrouge (FR)
(72) Inventeur: Tchagaspanian, Michael, 38130 Echirolles (FR)
(74) Mandataire: Casalonga, Axel

(56) Documents cités:
- US-A- 5 499 392
- US-A- 5 689 818

## Description

La présente invention concerne le domaine des dispositifs de commutation de signaux radio-fréquences, également appelés "switch".

Ces dispositifs sont des composants très importants dans les systèmes radio-fréquences ayant plusieurs modes de fonctionnement, par exemple réception/émission, tels que les téléphones GSM, les télécommandes à tête radio-fréquence, etc. On peut les utiliser, pour indiquer à un signal radio-fréquence, quel chemin il doit suivre selon le fonctionnement choisi. On peut aussi les utiliser pour connecter ou déconnecter plusieurs parties d'un système entre elles. Par exemple ils servent à commuter une antenne entre la partie réceptrice et la partie émettrice d'un dispositif radio-fréquence. Enfin, ils peuvent servir à l'actionnement ou non de certains composants en fonction du mode choisi, par exemple un atténuateur, un amplificateur, etc.

On connaît, dans l'art antérieur, des dispositifs de commutation mécanique qui possèdent des performances d'isolation satisfaisantes, mais des vitesses de commutation extrêmement lentes et un coût très élevé.

On connaît aussi les dispositifs de commutation utilisant des composants en arséniure de gallium dont les performances sont satisfaisantes mais dont le coût est également très élevé.

Enfin, on connaît des dispositifs de commutation à base de transistors MOS intégrés sur une puce électronique, mais qui occupent une place considérable sur ladite puce, ce qui se traduit également par un coût élevé et ce, pour des performances relativement faibles.

On rappellera ici qu'un transistor MOS est monté pour la transmission de signaux entre son drain et sa source, en étant commandé par une tension appliquée à sa grille. Si la tension entre grille et source V_{gs} est inférieure à une tension seuil Vₜ, le transistor est dit bloqué. Il n'y a aucune conduction entre le drain et la source. Si la tension V_{gs} est supérieure à la tension Vₜ, un canal conducteur se forme entre le drain et la source, permettant ainsi le passage d'un signal. Or, la résistance entre le drain et la source présentée par un tel transistor MOS est proportionnelle à la longueur entre le drain et la source et inversement proportionnelle au produit de la largeur par l'épaisseur. Pour obtenir une résistance faible, on est donc conduit à prévoir une zone canal de grande largeur, permettant ainsi l'obtention d'une résistance drain-source de faible valeur, notamment par rapport à la valeur de référence de 50 ohms qui constitue la résistance d'entrée des circuits disposés en aval.

La présente invention a pour objet de proposer un dispositif de commutation intégré, peu coûteux et de faible encombrement sur une puce électronique.

Le dispositif de commutation de signaux radio-fréquences, selon l'invention, est du type disposé entre une antenne et des moyens d'émission et/ou de réception, comprenant au moins un transistor MOS apte à interrompre ou à transmettre lesdits signaux entre une première et une seconde bornes en fonction d'un signal de commande. La grille du transistor MOS est connectée à l'une des bornes. Le drain et la source dudit transistor MOS sont connectés tous deux à l'autre borne. Un tel dispositif peut aisément être intégré sans occuper une surface trop importante de substrat semi-conducteur.

Dans un mode de réalisation de l'invention, un second transistor MOS est disposé entre ladite autre borne et une masse, le drain et la source dudit second transistor MOS étant connectés l'un à ladite autre borne et l'autre à la masse.

Dans un mode de réalisation de l'invention, le dispositif comprend un circuit de commande du transistor MOS connecté à la grille et à la source et découplé des signaux RF.

Le circuit de commande peut être de type inductif ou résistif. Dans ce dernier cas, le circuit de commande peut comprendre une résistance disposée entre la source et la masse, et une source de tension apte à être commandée et une résistance disposées en série entre la grille et la masse.

Dans un mode de réalisation de l'invention, la source de tension comprend un inverseur à transistors MOS disposé entre la masse et une source de tension continue.

Une borne de commande peut être reliée à l'entrée de l'inverseur et, par l'intermédiaire d'une résistance, à la grille du premier transistor MOS.

Avantageusement, le dispositif comprend un transistor MOS apte à interrompre ou à transmettre lesdits signaux entre une première borne et une seconde borne et un transistor MOS apte à interrompre ou à transmettre lesdits signaux entre une première borne et une troisième borne en fonction du signal de commande.

On dispose ainsi d'un switch permettant l'aiguillage et/ou la commutation des signaux radio-fréquences et possédant des performances satisfaisantes d'isolation et d'atténuation, en particulier aux fréquences élevées. Ce switch présente l'avantage de n'utiliser qu'une faible surface de la puce électronique et de pouvoir facilement bénéficier des améliorations des technologies MOS disponibles dans le futur.

La présente invention sera mieux comprise à l'étude de la description détaillée de quelques modes de réalisation pris à titre d'exemples nullement limitatifs et illustrés par les dessins annexés, sur lesquels :
la figure 1 est une vue schématique du fonctionnement d'un transistor MOS selon l'invention, en mode passant;
la figure 2 est une vue similaire à la figure 1, en mode bloqué;
la figure 3 est un schéma d'un dispositif de commutation conforme à l'invention; et
les figures 4, 5 et 6 montrent des variantes de la figure 3.

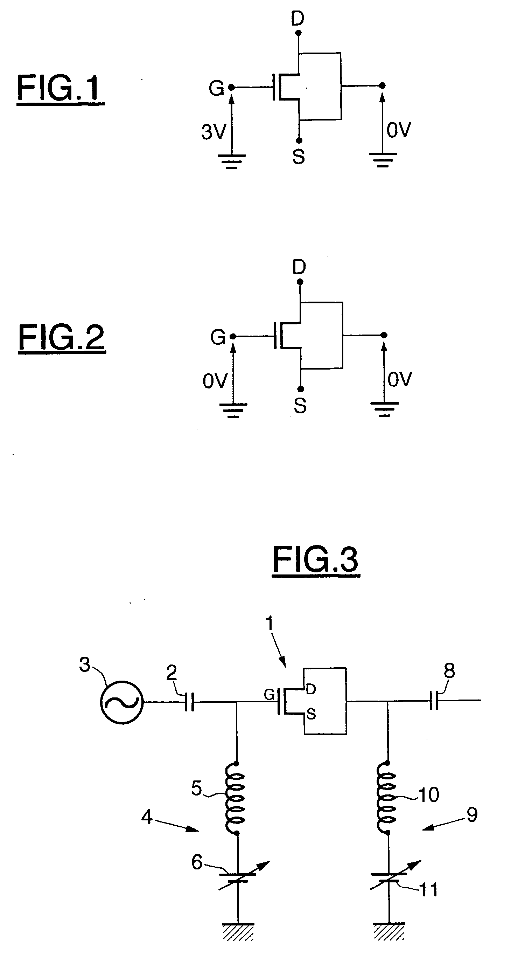

Comme on peut le voir sur la figure 1, le transistor MOS est utilisé, dans un dispositif de commutation conforme à l'invention, en court-circuitant le drain D et la source S. Lorsqu'on applique à la grille G une tension continue de 3 volts et à la source S une tension nulle, la tension V_{gs} est supérieure à la tension de seuil Vₜ qui est de l'ordre de 0,7-0,8 volts, et le transistor MOS est donc passant.

De plus, comme la tension entre drain et source V_{ds} est nulle, la tension V_{gs} se trouve supérieure à la somme de la tension V_{ds} et de la tension Vₜ et le transistor MOS fonctionne en région dite "Ohmique" et se comporte donc comme une résistance contrôlée en tension. Si l'on modélise ce transistor MOS passant par un circuit RC série, la résistance R est égale à la somme de la résistance de grille et du quart de la résistance de canal. En effet, le canal formé entre le drain et la source et qui se trouve sous la couche d'oxyde le séparant de la grille possède, à l'état passant, une résistance distribuée linéairement entre le drain et la source. Dans la mesure où cette résistance est distribuée, on peut la modéliser en considérant que le contact avec l'oxyde se fait uniquement au milieu entre le drain et la source et que ce point milieu voit une valeur de résistance R/2 vers le drain et R/2 vers la source. En raison de la mise en court-circuit du drain et de la source, la valeur de la résistance est donc le quart de la valeur de la résistance du canal. Il en résulte que la résistance à l'état passant est de faible valeur.

La capacité à l'état passant est essentiellement constituée par la capacité de la couche d'oxyde disposée entre la grille et le canal et est de valeur élevée. Il en résulte que l'impédance entre la grille et la source est faible et décroît avec la fréquence.

Sur la figure 2, on voit que l'on applique à la grille et à la source une tension nulle, la tension V_{gs} est donc nulle et inférieure à la tension de seuil Vₜ. Le transistor MOS est bloqué. Comme le canal entre le drain et la source n'est pas formé, la résistance à l'état bloqué est très élevée. La capacité n'est formée que des capacités de recouvrement grille sur drain et grille sur source et est donc de faible valeur . Le transistor MOS à l'état bloqué est donc équivalent à un interrupteur ouvert.

Sur la figure 3, est illustré un montage théorique conforme à l'invention. Le transistor MOS 1 voit sa grille G reliée d'une part à une capacité 2, elle-même reliée à la source de signaux radio-fréquences 3, par exemple une antenne de téléphone portable, et d'autre part, à un circuit de commande 4 comportant une inductance 5 et une source de tension variable 6 disposées en série. Le drain et la source du transistor MOS 1 sont court-circuités et reliés d'une part à une capacité 8, elle-même reliée à une charge, non représentée, devant recevoir le signal radio-fréquence en provenance de la source 3, et, d'autre part, à un circuit de commande 9 comportant une inductance 10 et une source de tension variable 11 disposées en série.

Les circuits de commande 4 et 9 fonctionnent de la façon suivante. Le générateur 6 peut délivrer, soit une tension nulle, soit une tension de 3 volts. Le générateur 11 peut délivrer, soit une tension nulle, soit une tension telle que la tension V_{gs} soit supérieure à la tension de seuil du transistor MOS considéré. Lorsque les deux générateurs 6 et 11 délivrent une tension nulle, la tension V_{gs} est nulle et le transistor MOS 1 est bloqué. Les capacités 2 et 8 permettent d'isoler les autres éléments du montage des tensions continues délivrées par les circuits de commande 4 et 9. Le transistor MOS 1 se comporte, comme on l'a vu sur la figure 2, comme une impédance élevée permettant de couper les signaux radio-fréquences en provenance du générateur 3.

Lorsque le générateur 6 délivre une tension continue de 3 volts et que le générateur 11 délivre une tension nulle, la tension V_{gs} est égale à 3 volts et est donc supérieure à la tension de seuil du transistor MOS 1, qui est alors à l'état passant. Le transistor MOS 1 présente comme on l'a vu pour la figure 1, une capacité élevée et une résistance faible. Son impédance est donc faible et décroît avec la fréquence du signal qui le traverse. Le signal radio-fréquence en provenance du générateur 3, par exemple d'une fréquence de quelques gigahertz, atteint la grille du transistor MOS 1 par l'intermédiaire de la capacité 2 qui est de faible impédance par rapport à ce signal. Le signal n'est pas atténué par l'inductance 5, qui se comporte comme un circuit ouvert vis-à-vis d'un signal de fréquence élevé. Le signal traverse alors le transistor MOS 1 et la capacité 8 et est ainsi connecté à la charge qui doit recevoir un tel signal. L'inductance 10 disposée en sortie du transistor MOS 1 se comporte vis-à-vis du signal radio-fréquence comme un circuit ouvert.

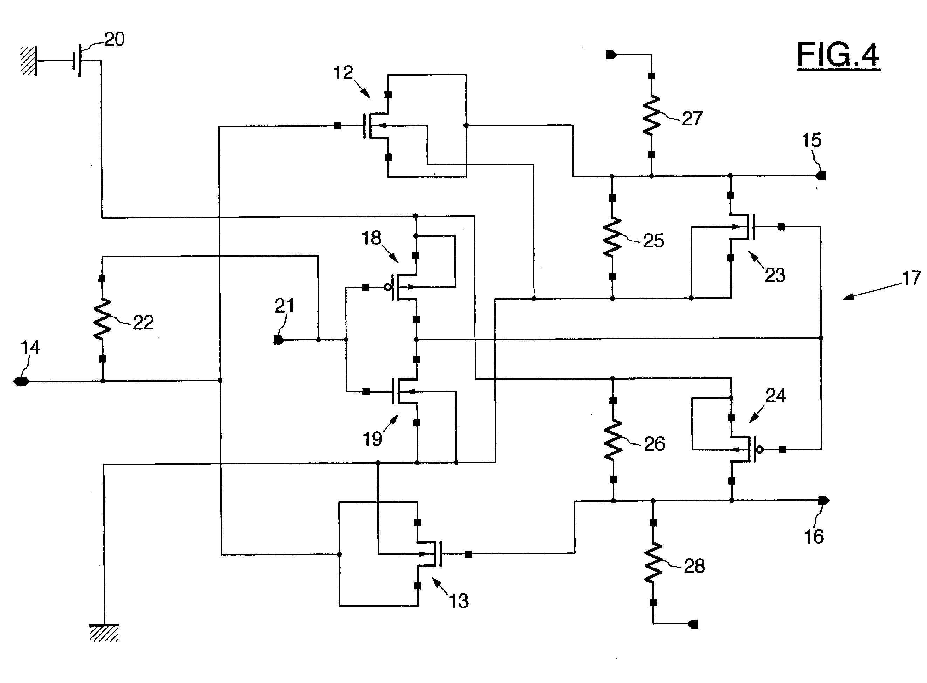

Toutefois, en raison des difficultés d'intégration des inductances 5 et 10, on pourra avantageusement les remplacer par des résistances de valeurs suffisantes pour ne pas atténuer le signal radio-fréquence. Un tel montage est représenté sur la figure 4.

On prévoit deux transistors MOS 12 et 13 permettant de diriger le signal radio-fréquence en provenance d'une antenne 14, soit vers un circuit d'émission 15, soit vers un circuit de réception 16. La grille du transistor 12 et le drain et la source du transistor 13 sont reliés à l'antenne 14. Le drain et la source du transistor 12 sont reliés au circuit d'émission 15. La grille du transistor 13 est reliée au circuit de réception 16.

Les transistors 12 et 13 sont commandés par un circuit de commande 17 qui comprend deux transistors MOS 18 et 19 montés en série et formant un inverseur. L'ensemble du dispositif est alimenté par une source de tension continue 20. Le drain du transistor 18 est relié à la source de tension continue 20. La source du transistor 18 et le drain du transistor 19 sont mutuellement connectés. La source du transistor 19 est reliée à la masse. Les grilles des transistors 18 et 19 sont connectées mutuellement et reçoivent un signal de commande en provenance d'une borne 21 et qui permet de sélectionner le mode d'émission ou le mode de réception. Les grilles des transistors 18 et 19 sont également reliées par l'intermédiaire d'une résistance 22 à l'antenne 14.

La source du transistor 18 et le drain du transistor 19 sont reliés aux grilles de deux transistors MOS 23 et 24. Le drain du transistor MOS 23 est relié au drain et à la source du transistor 12. La source du transistor 23 est reliée à la masse. Le drain du transistor 24 est relié à la source de tension continue 20. La source du transistor 24 est reliée à la grille du transistor 13. Enfin, une résistance 25 est disposée entre le drain et la source du transistor 12 et la masse, et une résistance 26 est disposée entre la grille du transistor 13 et la source de tension continue 20.

A titre optionnel, on peut prévoir de connecter, d'une part, le drain et la source du transistor 12 et, d'autre part, la grille du transistor 13 à des circuits d'offset, non représentés, par l'intermédiaire de résistances 27 et 28, afin de pouvoir jouer sur la polarisation des transistors 12 et 13.

Le dispositif de commutation fonctionne de la façon suivante. Lorsqu'une tension nulle est appliquée à la borne 21, les grilles des transistors 18 et 19 sont soumises à une tension nulle, la grille du transistor 12 est soumise à une tension nulle et le drain et la source du transistor 13 sont soumis à une tension nulle. La tension V_{gs} du transistor 19 est nulle et ce dernier est donc bloqué. Par l'intermédiaire de la résistance 22, la grille du transistor 12 et le drain et la source du transistor 13 sont également soumis à une tension nulle. La tension V_{gs} du transistor 12 est donc nulle dans la mesure où sa source est reliée à la masse par l'intermédiaire de la résistance 25. Le transistor 12 est donc bloqué. Par l'intermédiaire de la résistance 26, la grille du transistor 13 est soumise à la tension continue de la source 20. La tension V_{gs} du transistor 13 est donc supérieure à sa tension de seuil et le transistor 13 est à l'état passant. Comme les transistors 18 et 19 fonctionnent en inverseur, le transistor 18 est passant et son drain et sa source voient la même tension positive provenant de la source 20. Les grilles des transistors 23 et 24 voient donc cette tension positive. La tension V_{gs} du transistor 23 est supérieure à sa tension de seuil et le transistor 23 est donc passant. La tension V_{gs} du transistor 24 est nulle et celui-ci est donc bloqué. Il en résulte que le signal radio-fréquence arrivant par l'antenne 14 peut être transmis par le transistor 13 vers le circuit de réception 16. Au contraire, le signal sera interrompu par le transistor 12 entre l'antenne 14 et le circuit d'émission 15. Les valeurs des différentes résistances 22 et 25 à 28 seront choisies des valeurs suffisamment élevées, par exemple supérieures à 1 kohm pour ne pas atténuer de façon significative le signal radio-fréquence.

Lorsqu'une tension positive est appliquée à partir de la borne 21, par exemple une tension égale à la tension d'alimentation fournie par la source 20, le fonctionnement est inversé. Le transistor 19 est passant et le transistor 18 est bloqué. Les grilles des transistors 23 et 24 voient donc une tension nulle, d'où il découle que le transistor 23 est bloqué et que le transistor 24 est passant. Comme le transistor 23 est bloqué et que la grille du transistor 12 voit une tension positive par l'intermédiaire de la résistance 22, la tension V_{gs} du transistor 12 est positive et supérieure à sa tension de seuil. Le transistor 12 est donc passant.

Au contraire, le transistor 24 dont la grille est soumise à une tension nulle est passant. La grille du transistor 13 voit donc une tension positive, tandis que son drain et sa source voient une tension positive. La tension V_{gs} du transistor 13 est nulle et ce dernier est bloqué. Le signal radio-fréquence en provenance du circuit d'émission 15 peut donc être transmis par l'intermédiaire du transistor 12 vers l'antenne 14, tandis que toute transmission de signal entre l'antenne 14 et le circuit de réception 16 est empêchée par le blocage du transistor 13.

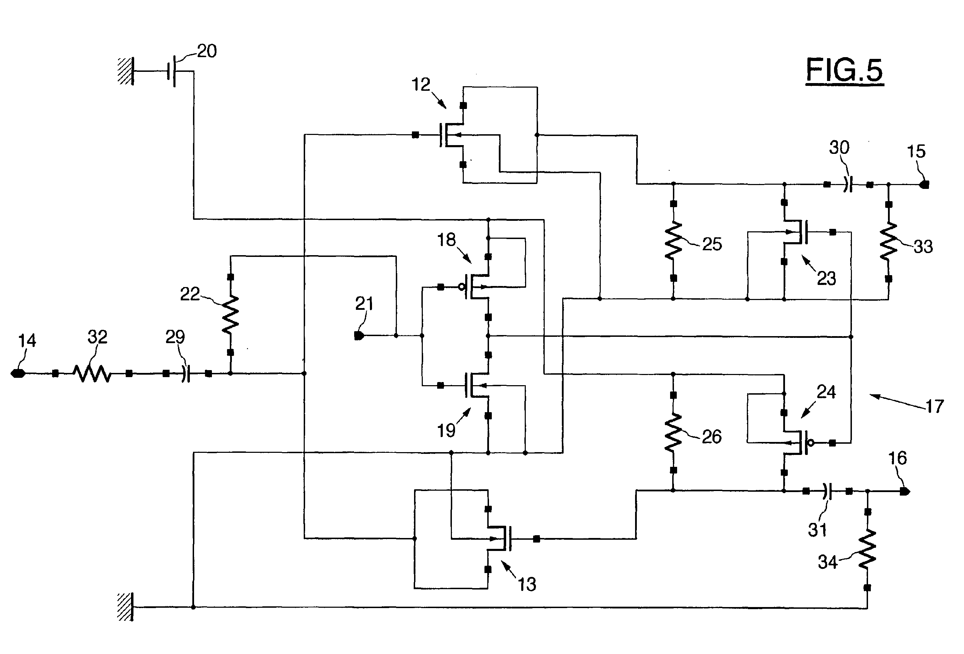

Sur la figure 5, est représentée une variante de la figure 4 sur laquelle on a prévu des capacités de découplage semblables dans leur principe aux capacités 2 et 8 de la figure 3. Une capacité 29 est prévue entre l'antenne 14 et le point commun à la résistance 22 à la grille du transistor 12 et au drain et à la source du transistor 13. Une capacité 30 est prévue entre le circuit d'émission 15 et le point commun au drain et à la source du transistor 12, au drain du transistor 23 et à la résistance 25. Une capacité 31 est prévue entre le circuit de réception 16 et le point commun à la grille du transistor 13, à la source du transistor 24 et à la résistance 26. De plus, on prévoit des résistances de 50 ohms afin que les circuits, non représentés, reliés au dispositif de commutation, voient une telle résistance de 50 ohms. Ainsi, une résistance 32 est disposée entre la capacité 29 et l'antenne 14, une résistance 33 est disposée entre le point commun de la capacité 30 et du circuit d'émission 15 et la masse et une résistance 34 est disposée entre le point commun à la capacité 31 et au circuit de réception 16 et la masse.

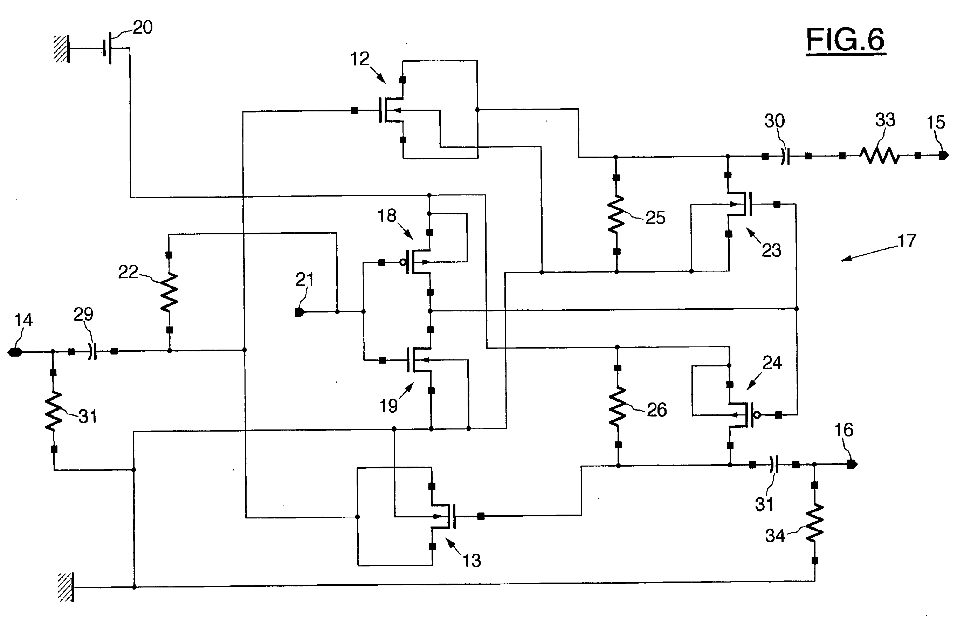

Sur la figure 6, est représentée une variante différente de la figure 5 en ce que la résistance 32 est disposée entre le point commun à la capacité 29 et à l'antenne 14 et la masse. La résistance 33 est disposée en série entre la capacité 30 et le circuit d'émission 15.

Ainsi, grâce à ce montage des transistors MOS qui permet de les utiliser en tant que capacité commandable, on peut augmenter la vitesse de commutation par rapport aux circuits connus. En mode passant, on ne voit que le quart de la résistance canal, ce qui permet, soit de profiter d'une résistance de valeur réduite, soit de diminuer la surface de silicium utilisée.

Les transistors 23 et 24 ont été représentés dans une configuration classique. Toutefois, on pourrait prévoir de les monter en capacité commandée de façon similaire aux transistors 12 et 13. De plus, comme soit leur drain, soit leur source est à la masse, une des deux diodes équivalentes formées entre le drain et le substrat et entre la source et le substrat n'intervient pas, d'où une réduction des capacités parasites.

Enfin, il est particulièrement intéressant d'utiliser un transistor MOS en tant que capacité commandée dans la mesure où il présente une capacité par unité de surface de l'ordre de cinq fois supérieure à celle présentée par une capacité intégrée en tant que telle.

Grâce à l'invention, on dispose donc d'un circuit de commutation pour signaux radio-fréquences possédant une vitesse de commutation élevée, peu coûteux en terme de surface de circuit intégrée, de performances s'améliorant avec l'augmentation de la fréquence du signal commuté et adaptable à toutes améliorations de la technologie du transistor MOS.

## Revendications

1. Dispositif de commutation de signaux radio-fréquences, du type disposé entre une antenne et des moyens d'émission et/ou de réception, comprenant au moins un transistor MOS apte à interrompre ou à transmettre lesdits signaux entre une première et une seconde borne en fonction d'un signal de commande, **caractérisé par le fait que** la grille du transistor MOS est connectée à l'une des bornes et que le drain et la source dudit transistor MOS sont connectés tous deux à l'autre borne.

2. Dispositif selon la revendication 1, **caractérisé par le fait qu'**un second transistor MOS est disposé entre ladite autre borne et une masse, le drain et la source dudit second transistor MOS étant connectés l'un à ladite autre borne et l'autre à la masse.

3. Dispositif selon la revendication 1 ou 2, **caractérisé par le fait qu'**il comprend un circuit de commande du transistor MOS connecté à la grille et à la source dudit transistor MOS et découplé des signaux RF.

4. Dispositif selon la revendication 3, **caractérisé par le fait que** le circuit de commande est de type inductif.

5. Dispositif selon la revendication 3, **caractérisé par le fait que** le circuit de commande est de type résistif.

6. Dispositif selon la revendication 5, **caractérisé par le fait que** le circuit de commande comprend une résistance disposée entre la source et la masse, et une source de tension apte à être commandée et une résistance disposées en série entre la grille et la masse.

7. Dispositif selon la revendication 6, **caractérisé par le fait que** la source de tension comprend un inverseur à transistors MOS disposé entre la masse et une source de tension continue.

8. Dispositif selon la revendication 7, **caractérisé par le fait qu'**une borne de commande est reliée à l'entrée de l'inverseur et, par l'intermédiaire d'une résistance, à la grille du premier transistor MOS.

9. Dispositif selon l'une quelconque des revendications précédentes, **caractérisé par le fait qu'**il comprend un transistor MOS apte à interrompre ou à transmettre lesdits signaux entre une première borne et une seconde borne et un transistor MOS apte à interrompre ou à transmettre lesdits signaux entre une première borne et une troisième borne en fonction du signal de commande.

## Claims

1. Device for switching radiofrequency signals, of the type placed between an antenna and transmission and/or reception means, comprising at least one MOS transistor capable of interrupting or transmitting the said signals between a first and a second terminal as a function of a control signal, **characterized in that** the gate of the MOS transistor is connected to one of the terminals and **in that** the drain and the source of the said MOS transistor are both connected to the other terminal.

2. Device according to Claim 1, **characterized in that** a second MOS transistor is placed between the said other terminal and a reference earth, the drain and the source of the said second MOS transistor being connected one to the said other terminal and the other to the reference earth.

3. Device according to Claim 1 or 2, **characterized in that** it comprises a circuit for controlling the MOS transistor, connected to the gate and the source of the said MOS transistor and decoupled from the RF signals.

4. Device according to Claim 3, **characterized in that** the control circuit is of the inductive type.

5. Device according to Claim 3, **characterized in that** the control circuit is of the resistive type.

6. Device according to Claim 5, **characterized in that** the control circuit comprises a resistor placed between the source and the reference earth, and a voltage source capable of being controlled and a resistor which are placed in series between the gate and the reference earth.

7. Device according to Claim 6, **characterized in that** the voltage source comprises an invertor with MOS transistors which is placed between the reference earth and a DC voltage source.

8. Device according to Claim 7, **characterized in that** one control terminal is connected to the input of the invertor and, via a resistor, to the gate of the first MOS transistor.

9. Device according to any one of the preceding claims, **characterized in that** it comprises an MOS transistor capable of interrupting or transmitting the said signals between a first terminal and a second terminal, and an MOS transistor capable of interrupting or transmitting the said signals between a first terminal and a third terminal, as a function of the control signal.

## Patentansprüche

1. Vorrichtung zum Schalten von Funkfrequenzsignalen des Typs, der zwischen einer Antenne und Sende- und/oder Empfangseinrichtungen angeordnet ist, aufweisend mindestens einen MOS-Transistor, der in der Lage ist, in Abhängigkeit von einem Steuersignal die Signale zwischen einem ersten und einem zweiten Anschluß zu unterbrechen oder zu übertragen, **dadurch gekennzeichnet, daß** die Gate-Elektrode des MOS-Transistors mit einem der Anschlüsse verbunden ist, und dadurch, daß die Drain- und die Source-Elektrode des MOS-Transistors alle beide mit dem anderen Anschluß verbunden sind.

2. Vorrichtung nach Anspruch 1, **dadurch gekennzeichnet, daß** ein zweiter MOS-Transistor zwischen dem anderen Anschluß und einem Massepotential angeordnet ist, wobei die Drain-Elektrode und die Source-Elektrode des MOS-Transistors mit dem anderen Anschluß bzw. mit dem Massepotential verbunden sind.

3. Vorrichtung nach Anspruch 1 oder 2, **dadurch gekennzeichnet, daß** sie eine Schaltung zur Steuerung des MOS-Transistors aufweist, die mit der Gate-Elektrode und der Source-Elektrode des MOS-Transistors verbunden ist und zu den Funkfrequenzsignalen entkoppelt ist.

4. Vorrichtung nach Anspruch 3, **dadurch gekennzeichnet, daß** die Steuerschaltung des induktiven Typs ist.

5. Vorrichtung nach Anspruch 3, **dadurch gekennzeichnet, daß** die Steuerschaltung des resistiven Typs ist.

6. Vorrichtung nach Anspruch 5, **dadurch gekennzeichnet, daß** die Steuerschaltung einen zwischen der Source-Elektrode und dem Massepotential angeordneten Widerstand und eine steuerbare Spannungsquelle und einen Widerstand aufweist, die in Reihe zwischen der Gate-Elektrode und dem Massepotential angeordnet sind.

7. Vorrichtung nach Anspruch 6, **dadurch gekennzeichnet, daß** die Spannungsquelle einen Inverter aus MOS-Transistoren aufweist, der zwischen dem Massepotential und einer Gleichspannungsquelle angeordnet ist.

8. Vorrichtung nach Anspruch 7, **dadurch gekennzeichnet, daß** ein Steueranschluß mit dem Eingang des Inverters und über einen Widerstand mit der Gate-Elektrode des ersten MOS-Transistors verbunden ist.

9. Vorrichtung nach einem der vorstehenden Ansprüche, **dadurch gekennzeichnet, daß** sie einen MOS-Transistor aufweist, der in der Lage ist, die Signale zwischen einem ersten Anschluß und einem zweiten Anschluß zu unterbrechen oder zu übertragen, und einen MOS-Transistor aufweist, der in der Lage ist, in Abhängigkeit des Steuersignals die Signale zwischen einem ersten Anschluß und einem dritten Anschluß zu unterbrechen oder zu übertragen.
